(19) Europäisches Patentamt
European Patent Office
Office européen des brevets

(11) **EP 4 538 824 B1**

(12) **EUROPEAN PATENT SPECIFICATION**

(45) Date of publication and mention
of the grant of the patent:
**17.06.2026 Bulletin 2026/25**

(21) Application number: **23306769.3**

(22) Date of filing: **11.10.2023**

(51) International Patent Classification (IPC):
**G05D 1/606** (2024.01)

(52) Cooperative Patent Classification (CPC):
**G05D 1/606;** G05D 2105/22; G05D 2107/17;
G05D 2109/254

(54) **METHOD FOR CONTROLLING THE MOTION OF A TARGET DRONE**

VERFAHREN ZUR STEUERUNG DER BEWEGUNG EINER ZIELDROHNE

PROCÉDÉ DE COMMANDE DU MOUVEMENT D'UN DRONE CIBLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**16.04.2025 Bulletin 2025/16**

(73) Proprietors:
• **Centre National de la Recherche Scientifique
75016 Paris (FR)**
• **Ecole Nat Superieure Arts Et Metiers Ensam
51000 Chalons En Champagne (FR)**

(72) Inventors:
• **CHINESTA SORIA, Francisco
75013 Paris (FR)**
• **BAILLARGEAT, Dominique
138602 Singapour (SG)**
• **AMMAR, Amine
49035 Angers Cedex 01 (FR)**

(74) Representative: **Hautier IP
20, rue de la Liberté
06000 Nice (FR)**

(56) References cited:
US-A1- 2019 147 753     US-A1- 2020 233 439
US-A1- 2022 128 996

## Description

The invention pertains to methods for estimating the wind field in a geographical area of interest.

In an application for planning the trajectory of a target drone within a geographical area of interest, such as for example a flying taxi carrying passengers, a surveillance drone observing people, or a delivery autonomous vehicle transporting parcels, it is necessary to consider the amplitude and the orientation of the wind at each point of the trajectory.

Indeed, the wind applies a force on the target drone that must be taken into account for the proper determination of the motion of the target drone, in particular when one seeks to optimize the trajectory according to a criterion, such as the total energy consumption or the minimization of sudden accelerations for the sake of passengers comfort.

It is therefore necessary to know the wind field at each point of the geographical area of interest, i.e. the instantaneous and local values of the parameters of the wind, this parameter being the amplitude (or velocity or speed) of the wind and the orientation (or direction) of the wind.

Precise simulation software is known that uses the airflow physical equations to determine the wind field from the boundary conditions, i.e. the conditions on the boundaries of a domain that includes the geographic area of interest.

However, such simulations are particularly cumbersome to run. They therefore cannot be executed by the on-board computer of the target drone, whose calculation capacities are reduced.

All the more so it is necessary to be able to estimate the wind field sufficiently quickly following a modification of the boundary conditions, to be able to plan or re-plan the trajectory of the target drone. However, such simulations take a significant amount of computing time to converge towards one solution.

This is not compatible with an embedded software, that must be light and offers nearly real time results.

US 2022/128996 A1 (TSURUMI SHINGO [JP]) 28 April 2022 (2022-04-28) discloses a control method and apparatus for controlling a flying body such as a helicopter or a multicopter. A receiving section of the control apparatus receives information regarding wind speed vectors respectively measured by plural anemometers located at different positions, eg wind strength and a wind direction measured by an anemometer provided on second mobile bodies. By performing a fluid simulation using wind speed vectors measured by plural anemometers that are external to the first mobile body, the wind-power prediction section may predict a wind power to be applied to the first mobile body 10 after elapse of a prescribed time period. The fluid simulation can be performed by numerically solving simultaneous equations including an equation continuous to a Navier-Stokes equation. Other control methods are shown in US 2019/147753 A1 (HENDRIAN MATTHEW B [US] ET AL) 16 May 2019 (2019-05-16) and US 2020/233439 A1 (IVANOV PAVEL [FI] ET AL) 23 July 2020 (2020-07-23).

The invention therefore aims at overcoming this problem by proposing a method for determining the wind field that is sufficiently light to be able to be executed quickly by the computer on board the target drone, so as to obtain nearly real-time information on the wind field. This piece of information can then be exploited according to the desired application, for example the planning of the trajectory of the target drone.

To this end, the object of the invention is to a method, a system and a computer program according to the appended claims.

The invention and its advantages will be better understood upon reading the description which will follow, provided solely by way of example with reference made to the accompanying drawings in which:

- Figure 1 is a general schematic representation of the system ;
- Figure 2 is a flow chart of the method according to the invention ;
- Figures 3 is a schematic view of the situation; and,
- Figure 4 is a flow chart of the various step to prepare the various model involved in the method of Figure 2.

In the following description of a preferred embodiment, the envisaged application is the planning of the optimal trajectory to be followed by a target drone, such as a flying taxi transporting passengers, inside a geographical area of interest.

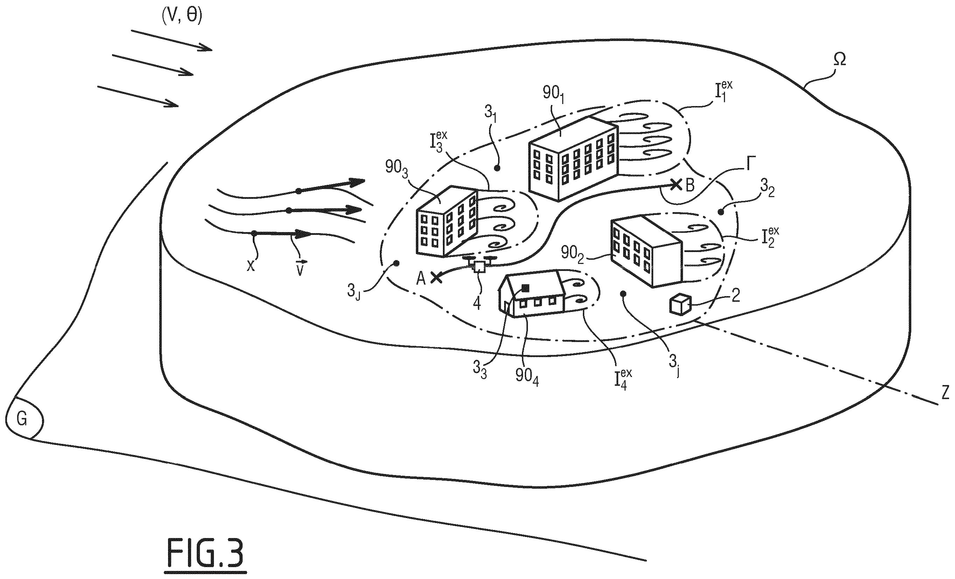

For this particular application, the geographical area Z of interest corresponds to the district of a city. As illustrated in Figure 3, the geographical area Z presents a set of buildings, like buildings $90_1$, $90_2$, $90_3$ and $90_4$.

## STRUCTURE OF THE SYSTEM

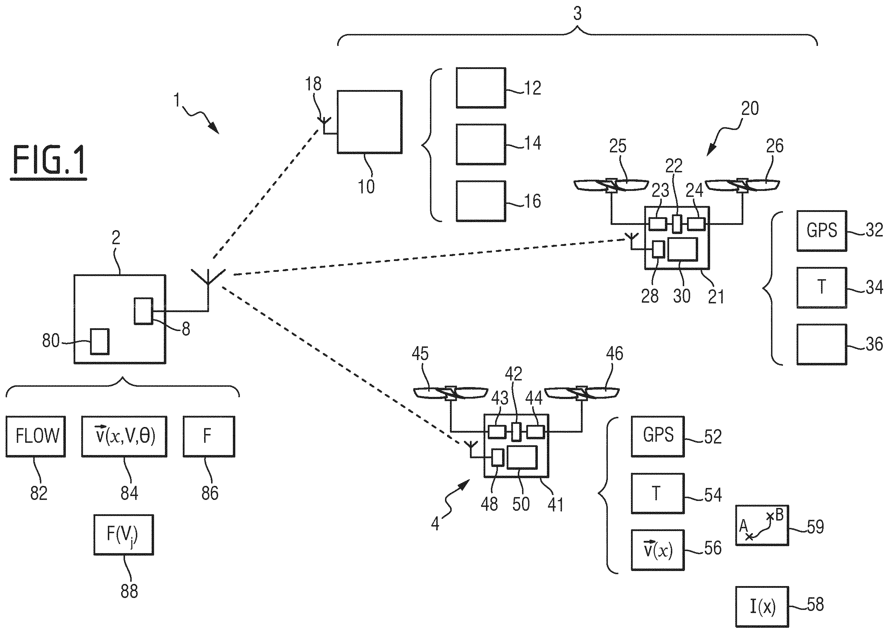

In the preferred embodiment shown in Figure 1, the system 1 according to the invention comprises : a set of measuring devices 3, one target drone 4 and a ground station 2.

## Measuring devices 3

According to the invention, a plurality of measuring devices is placed in the geographical area of interest to carry out measurements of the local and instantaneous values of the parameters of the wind, i.e. the amplitude (or velocity or speed) of the wind and the orientation (or direction) of the wind (for example relative to the North).

These measurements in different points inside the geographical area of interest will make it possible to determine the wind conditions on the boundaries of a domain $\Omega$ surrounding the geographical area of interest Z.

Figure 3 represents for example five measuring device $3_1$, $3_2$, $3_3$, $3_j$ and $3_J$.

In the embodiment shown in figure 1, there are two types of measuring devices, stationary measuring devices and mobile measuring devices.

A stationary or fixed measuring device, such as device 10 in Figure 1, has the function of measuring, at the place where it is installed, the instantaneous and local values of the parameters of the wind.

Device 10 comprises a sensor 12 suitable for measuring the amplitude of the wind and a sensor 14 suitable for measuring the direction of the wind. It comprises communication means 18 adapted to regularly transmit the measurements taken by the on-board sensors to the ground station 2.

Device 10 comprises communication means 18 suitable for transmitting to the ground station 2 the measurements of the parameters of the wind and the position and time of these measurements.

A mobile measuring device, also referred to as a sentinel drone in the following, such as sentinel drone 20 in Figure 1, has the function of measuring, while flying, the instantaneous and local values of the parameters of the wind.

Each sentinel drone comprises a platform 21 provided with an electric power source 22, a plurality of electric motors 23, 24, and a plurality of rotors 25, 26, each rotor being driven by at least one motor.

The sentinel drone comprises an on-board computer system 30.

The on-board computer system 30 comprises a satellite positioning module 32, for example of the GPS type. At each sampling time, it delivers a measurement of the instantaneous position of the sentinel drone. This position is advantageously three-dimensional. This module is also adapted to deliver a measurement of the instantaneous speed of the sentinel drone at each sampling time. This speed is advantageously three-dimensional. It is for example obtained by computing the temporal variation of the instantaneous position.

The on-board computer system 30 comprises a propulsion module 34 for managing the propulsion of the sentinel drone. This module makes it possible to adjust the power of each motor to pilot the sentinel drone. The propulsion module is thus capable of determining the instantaneous value T of the power for each motor of the drone. If we consider a drone with four motors, the wind parameters will be deduced from these four power values (scalars) and the speed (vector) of the drone.

The on-board computer system 30 advantageously comprises a wind measurement module 36 implementing a physics-based drone flight model for computing the instantaneous and local value of the parameters of the wind from the instantaneous values of the position of the sentinel drone, the speed of the sentinel drone and the power of the motors of the sentinel drone.

The on-board computer system 30 comprises communication means 28 suitable for transmitting to the ground station 2 the measurements of the parameters of the wind and the position and time of these measurements.

Ground station

In the embodiment of Figure 1, the ground station 2 comprises communication means 8 suitable for the communication with the target drone 4, as well as the various measuring devices 3.

In particular, the ground station 2 receives regularly the instantaneous and local values of the parameters of the wind $V_j$ as measured by measuring devices $3_j$.

The ground station 2 includes a computer 80.

This computer 80 is suitably programmed to run various programs, in particular offline and online programs.

In particular, the computer 80 executes offline a fine airflow simulation program 82 allowing the precise determination of the wind field $\vec{v}(x)$ inside the domain $\Omega$ given boundary wind conditions, V and $\theta$.

The computer 80 also executes offline a reduction program 84 making it possible, following a plurality of fine airflow simulations, to determine a parametric model that gives the wind field from the boundary wind conditions alone. This parametric model is noted $\vec{v}(x; V, \Theta)$ in the following.

The computer 80 executes offline an inverse reduction program 86 making it possible to determine, from the parametric model, an inverse model which gives the boundary conditions V and $\theta$, from a plurality of estimations of the parameters of the wind inside the domain $\Omega$, these estimations being the measurements $V_j$ performed by the measuring devices 3.

Preferably the inverse reduction program 86 allows the optimization of the total number J of measuring devices and their position so that the measurements of the parameters of the wind recorded by the various measuring devices lead to a robust estimate of the wind field, and from there a correct determination of the boundary conditions.

The computer 80 executes online a boundary condition module 88. This module implements the inverse model as determine by program 86. Module 88 determines, from the plurality of instantaneous and local measurements of the parameters of the wind, $V_j$, the instantaneous values of the boundary wind conditions V and $\theta$.

The ground station 2 transmits regularly the instantaneous values of the boundary wind conditions V and $\theta$, as calculated by module 88 to the target drone 4.

Target Drone

The target drone 4 has, in the present example, the function of transporting passengers inside the geographical area of interest Z, while optimizing its trajectory by taking into account the wind.

The target drone comprises a platform 41 equipped with an electric power source 42, a plurality of electric motors 43, 44, and a plurality of rotors, 45, 46, each rotor being driven by at least one motor.

The target drone 4 includes an on-board computer system 50.

The on-board computer system 50 comprises a satellite positioning module 52, for example of the GPS type. At each sampling time, it delivers a measurement of the instantaneous position of the target drone. This position is advantageously three-dimensional. This module is also capable of delivering, at each sampling step, a measurement of the instantaneous speed of the target drone. This speed is advantageously three-dimensional. It is for example obtained by determining the temporal variation of the instantaneous position of the target drone.

The on-board computer system 50 of the target drone 4 includes a propulsion module 54. In particular, this module makes it possible to adjust the power of each motor in order to move the target drone properly.

The on-board computer system comprises communication means 48 suitable for receiving, from the ground station 2, the instantaneous values of the boundary conditions V and $\theta$, as calculated by module 88 of station 2.

The on-board computer system 50 includes a wind field module 56 for calculating the wind field. This module implements a wind field calculation model allowing, from the boundary conditions V and $\theta$, to determine the wind field $\vec{v}(x)$, i.e. the parameters of the wind in any point x in the domain $\Omega$.

Advantageously, the on-board computer system 50 includes an exclusion domain module 58 for determining an exclusion domain, that is to say a sub-domain of the domain $\Omega$ within which the wind is too turbulent for a safe flight of the target drone 4. In Figure 3, elementary exclusion domains are represented behind corresponding buildings ($I^{ex}_1$ for building $90_1$, $I^{ex}_2$ for building $90_2$, $I^{ex}_3$ for building $90_3$ and $I^{ex}_4$ for building $90_4$, the reunion of these elementary domains making up the exclusion domain $I^{ex}$). This module implements an exclusion domain calculation model allowing, from the boundary conditions, to determine the exclusion domain $I^{ex}(x)$, i.e. a function associating to any point x in the domain $\Omega$ a binary value equal to 1 when the target drone is authorized to be in point x and equal to 0 when the target drone is not. The excluded domain $I^{ex}$ is subtracted from the domain $\Omega$ in order to restrict the latter to an operational domain, within which the target drone is authorized to fly. The computation of the wind field may be limited to this operational domain once determined.

The on-board computer system 50 includes a planning module 59. This module implements a trajectory planning model for planning the trajectory of the target drone allowing the computation of an optimal trajectory $\Gamma$ taking into account the wind field as output by module 56 and also preferably the operational domain as output by module 58.

This optimal trajectory allows the target drone to be piloted to carry out a mission, like moving from point A to point B in the geographic area Z. The planning of an optimal trajectory uses a constraint which is based on the wind field. This constraint may be the search for the trajectory optimizing the energy consumption of the target drone, or even limiting the accelerations of the target drone along the trajectory for the comfort of the passengers.

METHOD

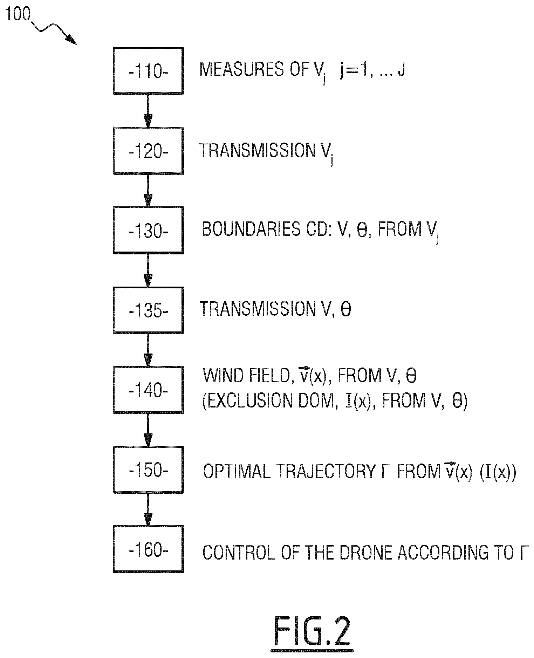

The method 100 of operating system 1 in order to control the motion of a target drone will now be describe by reference to Figure 2.

In step 110, each measuring device $3_j$ that is placed in the geographic area of interest Z regularly performs measurements of the wind parameters.

Preferably, sentinel drones 20 are used to perform measures away from the buildings.

More preferably, the measures of the wind parameters acquired by a sentinel drone are obtained indirectly. The computer onboard the sentinel drone 20 executes the wind determination module 36 to get the instantaneous and local values of the amplitude and orientation of the wind, at the current position of the sentinel drone, from the current speed of the sentinel drone and the instantaneous power T supplied to the motor of the sentinel drone. The current position and speed are given by the GPS module 32.

In step 120, the measurements, $V_j$, taken by the various measuring devices, are transmitted to the ground station 2.

In a step 130, the ground station 2 executes the boundary condition module 88. This makes it possible to determine the wind conditions at the boundaries of the domain, V and $\theta$, from the measurements $V_j$ obtained in step 120. Is for example considered the last measurements $V_j$ provided by each device $3_j$.

In a step 135, the ground station 2 sends the boundary conditions, V and θ, to the target drone.

In a step 140, the computer of the target drone 4 executes the wind field module 56 for determining the wind field, $\vec{v}$(x), from the boundary conditions, V and θ. Advantageously, the computer also determines, by running module 58, the exclusion domain, I(x), where the turbulences are too strong to allow the flight of the target drone. The operational domain $\Omega^{op}$ is then defined by subtracting the exclusion domain I(x) from the domain Ω.

Once the wind field $\vec{v}$(x) has been computed inside the operational domain, during the next step 150, the computer of the target drone 4 executes the planning module 59 in order to determine the optimal trajectory Γ according to the mission that the target drone must fulfil and an optimization criterion at least based on the wind field $\vec{v}$(x). The optimization criterion may be based on other quantities, in particular on the velocity of the target drone.

Once the optimal trajectory has been calculated, in step 160, the computer of the target drone 4 controls the motors so that the target drone follows this optimal trajectory Γ.

These different steps are iterated for example periodically, when the wind changes significantly, when the mission of the target drone changes, when the trajectory of the target drone has to be updated, or the like.

METHODS OF OBTENTION OF THE VARIOUS MODELS

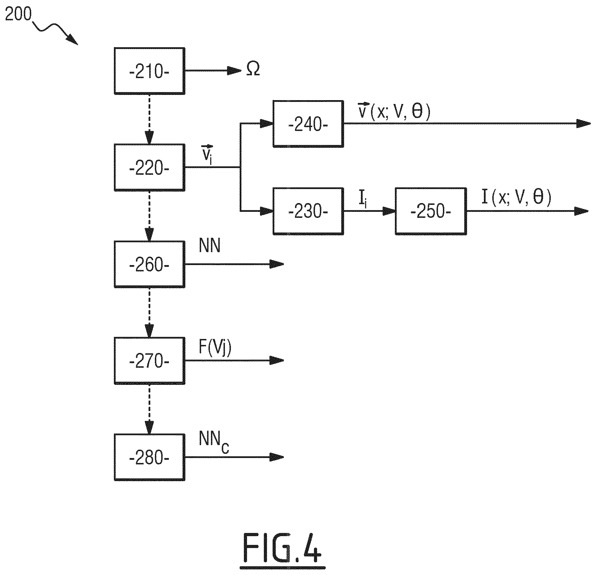

The method 200 to prepare system 1 will now be describe by reference to Figure 4.

Step 210 : Definition of the domain

Provided the geographic area of interest Z wherein the target drone 4 is to fly, the domain Ω is defined so as to surround this geographic area Z.

The domain Ω is delimited by an outer contour. The outer contour defines the boundaries of the domain. For example, this outer contour has a cylindrical shape, with a top surface at a constant altitude above the ground G (for example of a few tens of meters) and a peripheral surface of constant radius (for example of a few kilometers).

The domain Ω is chosen large enough to consider that, on its top and peripheral surfaces, the parameters of the wind are constant and equal to the parameters of the far-field wind, i.e. the wind unperturbed by the obstacles in the geographical area of interest, such as the buildings.

For the sake of simplicity, but without loss of generality, it is assumed that the far-field wind is planar. Its amplitude V and direction Θ thus defined the boundary conditions.

Advantageously, the volume of the obstacles of the geographic area of interest are subtracted to define the domain Ω.

Step 220 : Fine simulation of the wind field for various boundary conditions

The wind field $\vec{v}$(x) is a function that associates the amplitude v(x) and the orientation θ(x) of the wind with each point x of the domain Ω.

A design of experiments - DoE is built to cover N different boundary conditions, i.e. different magnitudes $V_i$ and orientations $\Theta_i$ of the far-field wind. Each experiment is labelled by integer i, between 1 and N.

To have more fidelity, one can introduce a spatial and temporal distribution of magnitude and orientation of the far-filed wind, to describe the fluctuations of the wind often observed in the geographical area of interest.

For each experiment i, i.e. for each set of boundary conditions $(V_i, \Theta_i)$, i = 1,..., N, the associated wind field $\vec{v}$(x; $V_i$, $\Theta_i$) = $\vec{v_i}$ is computed using a fine airflow physical simulation software.

This simulation is based on the turbulent Navier-Stokes equations.

The fine airflow physical simulation software is for example the commercial software OpenFOAM®.

For the simulation, it is assumed that, on the bottom surface of the domain (i.e. the ground level G in Figure 1) and on the surfaces of the building, usual wall conditions are enforced, in particular a non-slip boundary condition at the air-solid interface.

Step 230 : Computation of the exclusion domain for each simulation

It is well known that, in the rear part of a building (rear with respect to the local wind direction) there are intense vortices, within a region whose size depends on the local wind amplitude. These regions, with highly fluctuating wind velocity, should be removed from the domain Ω, to define the so called operational domain $\Omega^{Opp}$ ($\Omega^{Opp} \subset \Omega$).

For each experiment, the well-known Q-criterion relative to vortices is for example used as a condition to define the exclusion domain $I^{ex}$(x; $V_i$, $\Theta_i$) = $I^{ex}_i$ where the magnitude of the vorticity is greater than a threshold value.

N exclusion domains are thus computed in the DoE.

Step 240 : determination of the wind field calculation model of the wind field module 88

As the solutions calculated with the fine airflow physical simulation are very rich and detailed, for an efficient manipulation of the solutions, a compression step is implemented in step 240 to obtain the wind field calculation model.

This wind field calculation model is a parametric function $\vec{v}(x; V, \Theta)$ which, from the boundary conditions V and θ as the only inputs, makes it possible to obtain as output an approximation of the wind field $\vec{v}(x)$. It gives the wind filed in real-time (or almost instantaneously) as soon as the boundary conditions are given.

Preferably, a regularized regression is used to obtain the parametric function $\vec{v}(x; V, \Theta)$ from the N solutions $\vec{v}_i$ of the simulations of the DoE.

High-fidelity solutions are first compressed from the use of appropriate techniques, such as CUR matrix decomposition, "Proper orthogonal decomposition " - POD, "Proper generalized decomposition " - PGD, Cross approximation or the like, are well-known techniques for the person skilled in the art.

Preferably, a regularized polynomial regression technique making use of separated representations (sPGD or ANOVA-PGD) is used, for example as disclosed in the article Sancarlos et al. Advanced Modeling and Simulation in Engineering Sciences (2023) 10:4 https://doi.org/10.1186/s40323-023-00240-4, since this technique is recognized as extremely robust and accurate in borderline cases with very few data. It leads to better results than other regression techniques.

The parametric function $\vec{v}(x; V, \Theta)$ makes it possible to manipulate the many dimensions associated with the parameters, with sufficient richness to describe the solutions while relying on a small amount of data.

Step 250 : determination of the exclusion domain calculation model of the exclusion domain module 58

Similarly, as the solutions calculated with the fine airflow physical simulation are very rich and detailed, for an efficient manipulation of the solutions, a compression step is implemented in step 250 to obtain the exclusion domain calculation model.

This exclusion domain model is a parametric function $I^{ex}(x; V_i, \Theta_i)$ which, from the boundary conditions V and θ as the only inputs, makes it possible to directly obtain an approximation of the exclusion domain $I^{ex}(x)$, as output. It gives the exclusion domain in real-time (or almost instantaneously) as soon as the boundary conditions are given.

Preferably, a regularized regression is used to obtain the parametric function $I^{ex}(x; V, \Theta)$ from the N solutions $I^{ex}_i$ of the simulations of the DoE.

The operational domain is obtained by removing the excluded domain from the domain $\Omega$.

Step 260: Physics-based drone flight model for the wind measurement module 36

The wind measurements delivered by each sentinel drone can be made either directly by means of a suitable set of on-board sensors, or indirectly from the flight variables of the sentinel drone itself. Since the sentinel drone disturbs the measures that would be performed by on-board sensors, the indirect technique is preferred over the direct technique.

The indirect technique will now be explained in details.

Generally speaking, for sentinel drone j (j integer between 1 and D, where D is the total number of sentinel drones), the power $T_j$ of its motors allows the sentinel drone to overcome gravity and drag to move forward with a set speed $\dot{x}_J$ (where operator " " denotes the time derivation). Since the drag depends on the relative speed between the sentinel drone and the wind, the power $T_j$ that is required to maintain this set speed $\dot{x}_J$ depends indirectly on the parameters of the wind in point $x_j$, where the sentinel drone is currently positioned.

In a preferred embodiment, a neural network model NN is used that takes as entry the instantaneous speed $\dot{x}_J$ of the sentinel drone (derived from the instantaneous position $x_j$ given by the GPS module 32), and the instantaneous power $T_j$ of the motors of the sentinel drone (given by the propulsion module 36). The neural network model NN outputs the values of the parameters of the wind at point $x_j$ where the sentinel drone j is located at the time of the measure.

This neural network model NN model is for example trained by performing aerodynamic tests on a sentinel drone in a wind tunnel.

Step 270: inverse model of the inverse reduction program 86

The next step is to derive the inverse model F for inferring the far-field wind parameters (V, Θ) from the plurality of wind measurements $V_j$ at point $x_j$ obtained from the J measurement devices $3_j$ (in particular the D sentinel drones).

From the J wind measures $V_j$, the boundary conditions V and Θ can be obtained by the inverse model:

$$(V, \Theta) = F(V_j) = \mathrm{argmin}_{V^*, \Theta^*} \sum_{j=1}^{J} \left\| \vec{v}(x = x_j; V^*, \Theta^*) - V_j \right\|^2 \qquad (1)$$

where argmin is the best fit operator to find the smallest possible values given constraints.

In this equation, the J measures $V_j$ as considered as estimators of the wind-field wind $\vec{v}(x; V^*, \Theta^*)$ at points $x_j$, and the best fit operator outputs the values of V and $\Theta$ that minimize the sum.

Preferably, this step is improved in order to optimize the total number J of measurement devices and their positions $x_j$ to enhance the inverse problem accuracy. For example, the parametric wind expression $\vec{v}(x; V, \Theta)$ is used first with J equal to 1to select the best location $x_1$ to observe the wind for any possible V and $\Theta$, then with J equal to 2, to observe at the best the wind conditions that the first sensor placed at $x_1$ cannot observe, leading to $x_2$, and so on until being able to infer any far wind condition V and $\Theta$. This procedure minimizes the number J of sensors while ensuring observability and then the well-posed inverse problem.

For example, a Discrete Empirical Interpolation Method - DEIM is used. This well-known procedure is for example presented in the article F. Chinesta et al. "PGD-Based Computational Vademecum for Efficient Design, Optimization and Control", Archives of Computational Methods in Engineering, 20, 31-59 (2013), DOI 10.1007/s11831-013-9080-x.

With the far-field wind parameters identified, V and $\theta$, the wind-map can be reconstructed everywhere in the domain, as well as the excluded volume, using the parametric models. $\vec{v}(x; V, \Theta)$ and $I^{ex}(x; V, \Theta)$ respectively.

Step 280: trajectory planning model of the planning module 59

With the detailed knowledge of the environmental conditions, an artificial intelligence model can be used to obtain, in near real time, an optimal trajectory, considering the mission to be fulfilled by the target drone (for example to reach point B of the geographical area of interest Z starting from point A of the geographical area of interest Z), and the constraint(s) that this trajectory has to optimized (i.e. the cost function to minimize), this constraint taking into account the wind field in the domain $\vec{v}(x)$.

This optimization problem is performed under deterministic conditions by solving the Euler-Lagrange equations, with an explicit (polynomial) or implicit (neural network) cost function.

In this latter case, a neural network $NN_C$, informed by physics (by trying to force verification of the Euler-Lagrange equations), is used to obtain the optimal trajectory $\Gamma$, i.e. the position, P(t), and the speed, P(t), at each time t, to minimize the cost function. This well-known procedure is for example presented in the article Chady Ghnatios et al. "Optimal velocity planning based on the solution of the Euler-Lagrange equations with a neural network based velocity regression", in Discrete and Continuous Dynamical Systems - S, March 2023, doi: 10.3934/dcdss.2023080.

When the model contains rapid temporal fluctuations, the optimization could be performed by a pre-trained reinforcement learning algorithm.

ALTERNATIVE EMBODIMENTS AND ADVANTAGES

The method is optimal and very effective when the various models are combined as described above.

However numerous alternatives can readily be aknowledge by the person skilled in the art.

In this regard, according to the preferred embodiment, measures are sent to the ground station 2, which computes the boundary conditions V and $\theta$. These pieces of information are then broadcasted by the ground station to the target drone or the fleet of target drones. On reception of these pieces of information, one target drone computes the wind field in the domain and from there its trajectory. But, in an alternative embodiment, the measures are send to each target drone. This can be done directly from the various measuring devices to the target drone or indirectly via the ground station. A target drone is programmed with a module similar to module 88 to be able to compute the boundary conditions V and $\theta$ from the measures Vj received. This alternative can be encompassed if the computational resources on-board the target drone are sufficient.

Rather than or in combination with fixed or mobile measuring devices, that are able to measure local values of the wind parameters (i.e. where the measuring device is located at the time of the measurement), a measuring device could be provided with means for measuring these wind parameters at a point remote from the location of the measuring device. Typically, LIDAR sensor can be used in this case. Advantageously, such a sensor can be piloted to scan a plurality of points of the domain in a short period of time.

In another alternative, the target drone can be used to realize measures of the wind parameters and send them to the ground station. Indeed, as for the modules 34 and 36 of a sentinel drone, the computer 50 of the target drone 4 may be programmed to compute the values of the wind parameters from the power T provided the motors of the target drone. This solution helps to reduce the number of drones in system 1.

The wind evolves on a time scale of the order of the hour, usually less (half a day) and rarely more (tens of minutes in case of a storm). Consequently, the steps of the method of operation of the system can be performed every hour or so, and the wind parameters considered as constant during two consecutive iterations. This is in this time scale that the words "constant", "regularly", and so on of the present description have to be understood.

**Claims**

1. Method (100) for controlling a motion of a target drone (4) inside a geographical area of interest (Z), comprising the steps of :

    - acquisition (110), by a plurality of measuring devices located throughout the geographical area of interest, of a plurality of measures of values of wind parameters, the wind parameters comprising an amplitude and an orientation of the wind;

    **characterised in that** the method further comprises the steps of:

    - determining (130), from the plurality of measures, boundary conditions, defined as values of the wind parameters at a boundary of a domain surrounding the geographical area of interest;
    - determining (140), by using a first parametric function that depends on the boundary conditions only, a wind field, the wind field providing the values of the wind parameters in any point inside the domain; and,
    - controlling (160) the target drone by taking into account the wind field.

2. Method according to claim 1, wherein the first parametric function is obtained (220, 240) through a regularized regression on a plurality of solutions resulting from fine simulations.

3. Method according to claim 2, wherein the step of determining (130), from the plurality of measures, boundary conditions, uses an inverse model, the inverse model being obtained (270) from the first parametric function.

4. Method according to any one of claim 1 to 3, further comprising the step of determining, by using a second parametric function that depends on the boundary conditions only, an exclusion domain, where a condition on the values of the wind parameters is not verified to allow the flight of the target drone, the determination of the wind field being limited to an operational domain defined by subtracting the exclusion domain from the domain.

5. Method according to claim 4, wherein the second parametric function is obtained (220, 230, 250) through a regularized regression on a plurality of solutions resulting from fine simulations.

6. Method according to any one of claims 1 to 5, wherein controlling (160) the target drone by taking into account the wind field comprises:

    - planning (150), by a computer onboard the target drone, an optimal trajectory ($\Gamma$) according to a mission that the target drone has to fulfil and an optimization criterion based on the wind field ; and,
    - controlling (160) the target drone to move according to the optimal trajectory ($\Gamma$).

7. System (1) for the implementation of a method according to any one of claims 1 to 6, comprising:

    - a plurality of measuring devices (3) distributed throughout the geographical area of interest (Z), to acquire a plurality of measures of values of parameters of the wind, the parameters of the wind comprising an amplitude and an orientation of the wind;
    - a first computer (80) programmed to compute, from the plurality of measures, boundary conditions, defined as values of the parameters of the wind at a boundary of a domain surrounding the geographical area of interest;
    - a second computer (50) to compute, using a first parametric function that depends on the boundary conditions only, a wind field, the wind field providing the values of the parameters of the wind in any point inside the domain; and,
    - a target drone (4) to be controlled based on the wind field as determined by the second computer.

8. System according to claim 7, wherein the first and second computers are onboard the target drone (4), the target drone receiving the measures from the plurality of measuring devices, either directly or indirectly via a ground station (2), or wherein the first computer is in a ground station and the second computer is onboard the target drone, the ground station receiving the measures from the plurality of measuring devices and transmitting the boundary conditions to the target drone.

9. System according to claim 7 or claim 8, wherein the plurality of measuring devices comprises at least one sentinel drone (20), the sentinel drone comprising a third computer programmed to measure the wind parameters from an instantaneous speed of the sentinel drone and an instantaneous power supplied to motors of the sentinel drone.

10. A computer program comprising software instructions which, when executed by the first computer, the second computer, and/or the third computer of the system according to any one of claim 7, implement the method according to any one of claims 1 to 6.

**Patentansprüche**

1. Verfahren (100) zum Steuern einer Bewegung einer Zieldrohne (4) innerhalb eines geografischen Interessengebiets (Z), umfassend die Schritte:

   - Erfassen (110) durch eine Vielzahl von Messvorrichtung, die sich in dem gesamten geografischen Interessengebiet befinden, einer Vielzahl von Messungen von Werten von Windparametern, wobei die Windparameter eine Amplitude und eine Orientierung des Windes umfassen;
   **dadurch gekennzeichnet, dass** das Verfahren weiter folgende Schritte umfasst:

   - Bestimmen (130) aus der Vielzahl von Messungen von Grenzbedingungen, definiert als Werte der Windparameter an einer Grenze eines Bereichs, der das geografische Interessengebiet umgibt;
   - Bestimmen (140) eines Windfelds unter Verwendung einer ersten parametrischen Funktion, die nur von den Grenzbedingungen abhängt, wobei das Windfeld die Werte der Windparameter an einem beliebigen Punkt innerhalb des Bereichs bereitstellt; und
   - Steuern (160) der Zieldrohne unter Berücksichtigung des Windfelds.

2. Verfahren nach Anspruch 1, wobei die erste parametrische Funktion durch eine regulierte Regression auf eine Vielzahl von Lösungen, die sich aus Feinsimulationen ergeben, erhalten wird (220, 240).

3. Verfahren nach Anspruch 2, wobei der Schritt des Bestimmens (130), aus der Vielzahl von Messungen, von Grenzbedingungen ein inverses Modell verwendet, wobei das inverse Modell (270) aus der ersten parametrischen Funktion erhalten wird.

4. Verfahren nach einem der Ansprüche 1 bis 3, weiter umfassend den Schritt des Bestimmens, durch Verwendung einer zweiten parametrischen Funktion, die nur von den Grenzbedingungen abhängt, eines Ausschlussbereichs, wobei eine Bedingung für die Werte der Windparameter nicht verifiziert wird, um den Flug der Zieldrohne zu ermöglichen, wobei die Bestimmung des Windfelds auf einen durch Subtraktion des Ausschlussbereichs von dem Bereich definierten Betriebsbereich beschränkt ist.

5. Verfahren nach Anspruch 4, wobei die zweite parametrische Funktion durch eine regulierte Regression auf eine Vielzahl von Lösungen, die sich aus Feinsimulationen ergeben, erhalten wird (220, 230, 250).

6. Verfahren nach einem der Ansprüche 1 bis 5, wobei das Steuern (160) der Zieldrohne unter Berücksichtigung des Windfelds umfasst:

   - Planen (150), durch einen Computer an Bord der Zieldrohne, einer optimalen Flugbahn ($\Gamma$) gemäß einer Mission, die die Zieldrohne erfüllen muss, und eines Optimierungskriteriums auf Grundlage des Windfelds; und
   - Steuern (160) der Zieldrohne, um sich entsprechend der optimalen Flugbahn ($\Gamma$) zu bewegen.

7. System (1) zur Durchführung eines Verfahrens nach einem der Ansprüche 1 bis 6, umfassend:

   - eine Vielzahl von Messvorrichtungen (3), die über das geografische Interessengebiet (Z) verteilt sind, um eine Vielzahl von Messungen von Werten von Parametern des Windes zu erfassen, wobei die Parameter des Windes eine Amplitude und eine Orientierung des Windes umfassen;
   - einen ersten Computer (80), der programmiert ist, um aus der Vielzahl von Messungen Grenzbedingungen zu berechnen, die als Werte der Parameter des Windes an einer Grenze eines Bereichs, der das geografische Interessengebiet umgibt, definiert sind;
   - einen zweiten Computer (50), um unter Verwendung einer ersten parametrischen Funktion, die nur von den Grenzbedingungen abhängt, ein Windfeld zu berechnen, wobei das Windfeld die Werte der Parameter des Windes an einem beliebigen Punkt innerhalb des Bereichs bereitstellt; und

- eine Zieldrohne (4), die auf Grundlage des von dem zweiten Computer bestimmten Windfelds gesteuert werden soll.

**8.** System nach Anspruch 7, wobei sich der erste und der zweite Computer an Bord der Zieldrohne (4) befinden, wobei die Zieldrohne die Messungen von der Vielzahl von Messvorrichtungen entweder direkt oder indirekt über eine Bodenstation (2) empfängt, oder wobei sich der erste Computer in einer Bodenstation befindet und der zweite Computer an Bord der Zieldrohne befindet, wobei die Bodenstation die Messungen von der Vielzahl von Messvorrichtungen empfängt und die Grenzbedingungen an die Zieldrohne überträgt.

**9.** System nach Anspruch 7 oder Anspruch 8, wobei die Vielzahl von Messvorrichtungen mindestens eine Wächterdrohne (20) umfassen, wobei die Wächterdrohne einen dritten Computer umfasst, der programmiert ist, um die Windparameter aus einer Momentangeschwindigkeit der Wächterdrohne und einer Momentanleistung zu messen, die den Motoren der Wächterdrohne zugeführt wird.

**10.** Computerprogramm, das Softwareanweisungen umfasst, die, wenn sie von dem ersten Computer, dem zweiten Computer und/oder dem dritten Computer des Systems nach einem der Ansprüche 7 ausgeführt werden, das Verfahren nach einem der Ansprüche 1 bis 6 durchführen.

## Revendications

**1.** Procédé (100) de commande d'un mouvement d'un drone cible (4) à l'intérieur d'une zone géographique d'intérêt (Z), comprenant les étapes suivantes :

- l'acquisition (110), par une pluralité de dispositifs de mesure situés dans toute la zone géographique d'intérêt, d'une pluralité de mesures de valeurs de paramètres de vent, les paramètres de vent comprenant une amplitude et une orientation du vent ;
**caractérisé en ce que** le procédé comprend en outre les étapes suivantes :

- la détermination (130), à partir de la pluralité de mesures, de conditions de limite, définies comme des valeurs des paramètres de vent à une limite d'un domaine entourant la zone géographique d'intérêt ;
- la détermination (140), en utilisant une première fonction paramétrique qui dépend uniquement des conditions de limite, d'un champ de vent, le champ de vent fournissant les valeurs des paramètres de vent en tout point à l'intérieur du domaine ; et,
- la commande (160) du drone cible en tenant compte du champ de vent.

**2.** Procédé selon la revendication 1, dans lequel la première fonction paramétrique est obtenue (220, 240) par une régression régularisée sur une pluralité de solutions résultant de simulations fines.

**3.** Procédé selon la revendication 2, dans lequel l'étape de détermination (130), à partir de la pluralité de mesures, de conditions de limite, utilise un modèle inverse, le modèle inverse étant obtenu (270) à partir de la première fonction paramétrique.

**4.** Procédé selon l'une quelconque des revendications 1 à 3, comprenant en outre l'étape de détermination, en utilisant une deuxième fonction paramétrique qui dépend uniquement des conditions de limite, d'un domaine d'exclusion, où une condition sur les valeurs des paramètres de vent n'est pas vérifiée pour permettre le vol du drone cible, la détermination du champ de vent étant limitée à un domaine opérationnel défini en soustrayant le domaine d'exclusion du domaine.

**5.** Procédé selon la revendication 4, dans lequel la deuxième fonction paramétrique est obtenue (220, 230, 250) par une régression régularisée sur une pluralité de solutions résultant de simulations fines.

**6.** Procédé selon l'une quelconque des revendications 1 à 5, dans lequel la commande (160) du drone cible en tenant compte du champ de vent comprend :

- la planification (150), par un ordinateur embarqué dans le drone cible, d'une trajectoire optimale ($\Gamma$) selon une mission que le drone cible doit remplir et un critère d'optimisation basé sur le champ de vent ; et,
- la commande (160) du drone cible pour qu'il se déplace selon la trajectoire optimale ($\Gamma$).

7. Système (1) pour la mise en œuvre d'un procédé selon l'une quelconque des revendications 1 à 6, comprenant :

- une pluralité de dispositifs de mesure (3) répartis sur toute la zone géographique d'intérêt (Z), pour acquérir une pluralité de mesures de valeurs de paramètres du vent, les paramètres du vent comprenant une amplitude et une orientation du vent ;
- un premier ordinateur (80) programmé pour calculer, à partir de la pluralité de mesures, des conditions de limite, définies comme des valeurs des paramètres du vent à une limite d'un domaine entourant la zone géographique d'intérêt ;
- un deuxième ordinateur (50) pour calculer, en utilisant une première fonction paramétrique qui dépend uniquement des conditions de limite, un champ de vent, le champ de vent fournissant les valeurs des paramètres du vent en tout point à l'intérieur du domaine ; et,
- un drone cible (4) à commander sur la base du champ de vent tel que déterminé par le deuxième ordinateur.

8. Système selon la revendication 7, dans lequel les premier et deuxième ordinateurs sont embarqués dans le drone cible (4), le drone cible recevant les mesures à partir de la pluralité de dispositifs de mesure, directement ou indirectement via une station au sol (2), ou dans lequel le premier ordinateur est dans une station au sol et le deuxième ordinateur est embarqué dans le drone cible, la station au sol recevant les mesures de la pluralité de dispositifs de mesure et transmettant les conditions de limite au drone cible.

9. Système selon la revendication 7 ou la revendication 8, dans lequel la pluralité de dispositifs de mesure comprend au moins un drone sentinelle (20), le drone sentinelle comprenant un troisième ordinateur programmé pour mesurer les paramètres de vent à partir d'une vitesse instantanée du drone sentinelle et d'une puissance instantanée fournie aux moteurs du drone sentinelle.

10. Programme informatique comprenant des instructions logicielles qui, lorsqu'elles sont exécutées par le premier ordinateur, le deuxième ordinateur et/ou le troisième ordinateur du système selon la revendication 7, mettent en œuvre le procédé selon l'une quelconque des revendications 1 à 6.

# FIG.1

100

| -110- | MEASURES OF $V_j$  j=1, ... J |
| -120- | TRANSMISSION $V_j$ |
| -130- | BOUNDARIES CD: V, θ, FROM $V_j$ |
| -135- | TRANSMISSION V, θ |
| -140- | WIND FIELD, $\vec{v}(x)$, FROM V, θ<br>(EXCLUSION DOM, I(x), FROM V, θ) |
| -150- | OPTIMAL TRAJECTORY Γ FROM $\vec{v}(x)$ (I(x)) |
| -160- | CONTROL OF THE DRONE ACCORDING TO Γ |

## FIG.2

FIG.3

FIG.4

**EP 4 538 824 B1**

**Patent documents cited in the description**

- US 2022128996 A1
- US 2019147753 A1, HENDRIAN MATTHEW B [US]

- US 2020233439 A1, IVANOV PAVEL [FI]

**Non-patent literature cited in the description**

- **SANCARLOS et al.** *Advanced Modeling and Simulation in Engineering Sciences*, 2023, vol. 10, 4, https://doi.org/10.1186/s40323-023-00240-4
- **F. CHINESTA et al.** PGD-Based Computational Vademecum for Efficient Design, Optimization and Control. *Archives of Computational Methods in Engineering*, 2013, vol. 20, 31-59

- **CHADY GHNATIOS et al.** Optimal velocity planning based on the solution of the Euler-Lagrange equations with a neural network based velocity regression. *Discrete and Continuous Dynamical Systems - S*, March 2023